# EUROPEAN PATENT SPECIFICATION

(11) **EP 2 916 938 B1**
(45) Date of publication and mention of the grant of the patent: **02.08.2017**
(21) Application number: 13713903.6
(22) Date of filing: 03.04.2013
(51) Int. Cl.: B01F 7/02, B01F 7/04, A47J 43/07, B01F 7/00, B01F 13/10

(54) **BLENDER BLADE ASSEMBLY AND BLENDER**
MISCHERSCHAUFELANORDNUNG UND MISCHER
ENSEMBLE LAME DE MIXEUR ET MIXEUR

(30) Priority: 09.11.2012 WO PCT/EP2012/072298
(43) Date of publication of application: 16.09.2015
(73) Proprietor: Aktiebolaget Electrolux, 105 45 Stockholm (SE)
(72) Inventor: DAHLBECK, Erik, S-105 45 Stockholm (SE); ROJAS RESTREPO, Monica, S-105 45 Stockholm (SE); VINES, Brian, S-105 45Stockholm (SE)
(74) Representative: Electrolux Group Patents
(86) International application number: PCT/EP2013/057039
(87) International publication number: WO 2014/072083

(56) References cited:
- EP-A1- 2 486 833
- DE-B- 1 037 088
- FR-A1- 2 605 207
- US-A1- 2006 176 765
- US-A1- 2010 071 219
- US-A1- 2012 091 245
- US-B1- 8 056 848
- US-B1- 8 132 752

## Description

The present invention is directed to a blender blade assembly and a respective blender.

Current blenders in the market need to deal with different ingredients and recipes and be capable of liquefying, mixing and producing different textures. In most of cases, the performance of the blenders is measured in the final particle size after processing during certain period of time.

Therefore, the circulation inside the blender jar and the efficiency of the blades arranged in the blades assembly has a lot to do with achieving good results. One of the most difficult tasks when processing food in a blender is having to process viscous ingredients or recipes, such as smoothies, milkshakes or slushies, because the circulating movement is reduced, and the demand of power and efficiency from the motor and blades is increased. The viscosity of such ingredients also reduces the suction carried by the vortex, and an air pocket can be formed above the blades, causing them to spin without processing nearby food.

To avoid the formation of air pockets, it is known to use plungers by which the user can interact in a stirring movement and thus help to explode or remove the air pocket.

Further it is known to avoid or remove air pockets by improving the suction in the vortex by increasing the speed of the blender blades or adding more liquid to the mixture.

However, all these solutions bring unconformities to the user as in the first case, the user needs to intervene. In the second case, where in most cases rotational speeds of over 20,000 rpm are used, comparatively high noise levels, that are generally difficult to remove, are generated. And the third case the final result could be affected in quality of textures and flavour due to the addition of more liquid.

US2010/071219A1, which discloses a blender blade assembly in accordance with the preamble of claim 1, relates to the cutter of a juicer including a cutter set provided with a first cutter and a second cutter. The first cutter has its opposite ends respectively slanting to one side of the diagonal edges and their outer ends respectively bent upward to form a flow-guiding wall with a cutting edge at a diagonal edge. The second cutter is S-shaped and positioned over the first cutter.

US8132752B1 discloses a blade structure for a blender having at least three pairs of blade arms constructed and arranged to create regions of material movement in a blender cup.

FR2605207A1 discloses a mixing apparatus having a tool with two horizontal crescent-shaped blades a stirrer with inclined blades and a scraping arm bringing the ingredients from the wall back towards the tool.

EP2486833A1 discloses a mixing vessel provided with a blade assembly having a pair of upwardly extending blade arms, a pair of radially extending blade arms and a pair of downwardly extending blade arms.

Apart from the above solutions it is known to generate nonuniform vortices within the blender jar, for example by using special blender blade and/or jar geometries.

Another issue identified on the performance of blenders for example is the formation of ice bridges below the blender blade during processing frozen items, such as ice cubes. In general this issue relates to the aggregation of particulate matter below the blender blade during operation.

As can readily be seen, there is still need for improving blending or mixing results and vortex generation in conventional blenders.

It is one of the objects of the present invention to solve the inconveniences observed with state of technology. In particular, it is an object of the invention to provide solutions for achieving improved blending, mixing and vortex generation in blender jars of blenders.

This object is solved by claims 1 and 7. Embodiments result from respective dependent claims.

According to claim 1, a blender blade assembly is provided having a first blade with two first blade arms extending from a centre plane in opposite directions, wherein each blade arm comprises a planar base section extending perpendicularly from the centre plane, wherein the base section merges at its outer end into a wing section angled upwards from the base section, and wherein the blade assembly further comprises a second blade with two second blade arms, wherein each second blade arm comprises a curve shaped blade.

Each of the first blade arms comprises a planar base section extending perpendicularly from the centre plane. Note that the term "planar" in particular can be understood in the meaning of straight, flat and non-twisted. The base sections of the two blade arms start tangentially to the edge of the planar surface.

Each of the second blade arms is generally flat or planar all throughout their extension. The curve shaped (C-shaped) blade which describes a curved shape, is sharpen on top. Further it is arranged parallel to the bottom surface of the blender jar. The curved shape, is advantageous to guide pieces (of foodstuff) stuck on the bottom surface of the blender jar. The pieces are guided to the end of the curve shaped blade and thus closer to the blender jar walls. This increases the opportunities for the pieces to get back to the vortex or to be sliced when close to the blender jar walls.

With the proposed first blender blade, the base section merges at its outer or distal end, i.e. at the end averted from the centre plane, into a respective wing section, preferably also of planar configuration. Each of the wing sections is angled upwards from the respective base, i.e. the wing section is oriented aslant to the respective base section.

Regarding the mutual arrangement of the base section and the wing section, the first blade can be described as having a trough-shaped cross section in planes perpendicular to the centre plane and base sections.

With the proposed first blender blade it is further provided that each wing section is twisted such that a buckling line between the wing section and its related base section intersects the centre plane in an acute angle.

The twist of the wing section is closely related to the angle of attack of the cutting blade wing section, i.e. the attacking angle with which the wing section impinges or acts on substances to be mixed or blended. The angle of attack or attacking angle can advantageously be used for influencing, in particular improving, drag and lift forces and in turn influencing vortex generation, aeration and mixing.

With the proposed structure and geometry of the blender blade assembly, in particular first and second blade arms, it is possible to obtain advantageous drag and lift forces for a great variety of different blender jar geometries. Drag and lift forces in particular can be optimized in order to obtain optimal mixing. Further, with the proposed blender blade assembly geometry, the formation of air pockets in viscous substances around or above the blender blade can at least greatly be avoided or reduced.

The proposed blender blade assembly, in particular having a first blade with preferable trough-shaped cross section and a second blade being curve shaped, is particularly suitable for jars having a flat surface below the blades swept area at which the blender blade assembly is to be operated in a rotational movement.

According to blender blade assembly of claim 1, the first blade wing section merges at its outer end into a winglet section. Hence, each first blade arm comprises a winglet section which is arranged and positioned at the outer and upper end of the respective first blade arm. Preferably, the winglet section is running or oriented essentially parallel to the centre plane.

With winglet sections as proposed, it is possible to effectively reduce vortices generated at the end of the first blade arms during operation of the blender blade assembly. This in turn results in a better performance and in improved blending and mixing.

According to a further embodiment of the blender blade assembly, each blade arm comprises a cutting edge respectively starting essentially at the centre plane and running along a leading edge of each blade arm at least over the base section and wing section. The cutting edge preferably also extends, at the leading edge, at least partially over the winglet section. The leading edge of a blade arm shall mean the face side that impinges and acts on substances during ordinary operation, i.e. rotation, of the blender blade.

It is preferred that the cutting edge is implemented at an upper side of respective sections of the blender blade. In this configuration, a sharpen or bevelled edge is formed on or at the upper side or surface of the blender blade.

The proposed design of the cutting edge is effective in obtaining homogenous mixing results and therefore optimal blending and mixing of viscous substances, slurries and solid-liquid mixtures. Further, and also with the features and characteristics given above, advantageous performance and power demand for operating the blender blade can be obtained.

According to claim 1, an inclination angle by which the wing section is angled upwards, in particular upwards from a plane parallel to the base section and perpendicular to the centre plane, is in the range between 10 degrees and 60 degrees. Preferably, the inclination angle is selected in dependence of or determined by at least one of a bottom cross section, bottom diameter and bottom curvature of a blender jar intended for operating the blender blade therein, i.e. a blender jar in which the blender blade is intended to be operated.

Respective angles, preferably adapted to certain geometrical parameters of the blender jar, such as diameter near or at the jar bottom or shape of the jar bottom, are favourable for obtaining optimal mixing and blending and performance.

In a further embodiment, a twist angle by which the buckling line intersects the centre plane lies in the range between 1 degrees and 90 degrees, and preferably is selected in dependence of at least one of a bottom cross section, bottom diameter and bottom curvature of a blender jar intended for operating the blender blade therein. Twist angles within the mentioned range and/or selected in dependence of the mentioned parameters are of particular advantage for generating optimal drag and lift forces and allowing comparatively high mixing and blending efficiencies.

According to claim 7, a blender, in some instances also designated as mixer, or mixing device, is provided which comprises a blender jar, i.e. a blender or mixing vessel or container, and a blender blade according to any embodiment and variant as described further above.

With the proposed blender, the blender blade assembly is rotatably attached at a bottom site of the blender jar.

As to advantages and advantageous effects, reference is made to the description above and further below relating to the blender blade assembly. In particular, the proposed blender offers significant improvement in blending and mixing efficiency, in particular due to the fact of improved drag and lift forces and vortex generation. This in particular applies for blender jars having a jar bottom of concave, in particular semi-spherical or a flat bottom jar shape, preferably in connection with a blender blade of trough-shaped cross section.

In an embodiment of the blender, an axis of rotation of the blender blade within the blender jar is tilted from the perpendicular axis of a working surface, wherein the working surface is defined by the ordinary operational position of the blender. Note that the axis of rotation of the blender blade assembly according to the present invention preferably is perpendicular to the base section and lies within the centre plane of the blender blades. Tilting the axis of rotation of the blender blade assembly as proposed beforehand, leads to improved mixing and blending efficiency. In particular, vortex generation and circulation of the substances within the blender jar can greatly be improved.

In an embodiment of the blender, a tilt angle of the axis of rotation lies in the range from 5 degrees to 20 degrees. Tilt angles as mentioned beforehand have proven advantageous for efficient mixing and blending substances within the blender jar.

In all it can be seen, that the blender blade assembly and blender provide superior mixing and blending results. In particular, the vortex generation can be improved and optimized, which in the end will lead to a better performance of the blender. Moreover, the proposed blender blade assembly and blender provide improved circulation of ingredients inside the blender jar, optimized power consumption, in particular due to optimized drag and lift forces. Further, with the proposed blender blade assembly, unnecessary splashing and spilling of products or substances, such as liquids, in or from the blender jar can be greatly avoided.

The angle of attack essentially represented by the twist angle of the wing sections can directly influence the drag and lift forces. Setting suitable angles of attack can improve the aeration and produce bigger vortices. Note that the bigger the angle of attack, the bigger the drag and lift forces. This is due to the fact that for bigger angles of attack, increased surface areas for "pushing" the fluids within the jar are available, which will cause the liquids to move faster and higher inside the blender jar. Reducing the angle of attack decreases drag and lift forces, and also splashing and possible spilling. Consequently, a beneficial turbulence optimized for optimal performance can be obtained. In particular, optimized performance can be obtained for hard ingredients in liquids and viscous substances.

In addition, it shall be mentioned that improved drag and lift forces in general will cause the motor driving the blender blade to be more efficient, which will lead to reduced power consumption.

Operating the proposed blender blades assembly in a blender jar of flat bottom shape not only optimizes vortex generation and mixing in the volume above the blender blade, but also will lead to optimized circulation and recirculation in the volume below the blender blades or in isolated or narrow corners of the blender jar.

Therefore, the design of the blender blade assembly is effective in generating optimized drag and lift forces, and also in obtaining optimal sized and shaped vortices within the blender jar. The shape and configuration of the proposed blender blade assembly gainfully improves the final result of mixing and blending, and in addition is effective in reducing the power consumption of a motor driving the blender blade within the blender jar.

Embodiments of the invention will now be described in connection with the annexed figures, in which.
- FIG. 1a: shows a perspective view of a blender blade assembly according to an embodiment,
- FIG. 1b: shows an exploded view of the blade assembly of FIG. 1a,
- FIG. 1c: shows an exploded view of an embodiment of the blade assembly of FIG. 1a,
- Fig. 2: shows a section of a blender jar comprising the blade assembly of FIG. 1a,
- FIG. 3: shows a perspective view of an embodiment of a blender blade for a blender blade assembly;
- FIG. 4: shows a side view of the blender blade of FIG. 3;
- FIG. 5: shows a top view of the blender blade of FIG. 3; and
- FIG. 6: shows a section of a blender comprising a blender blade according to FIG. 3 to FIG. 5.

Unless otherwise mentioned, like elements are designated by like reference signs throughout the figures.

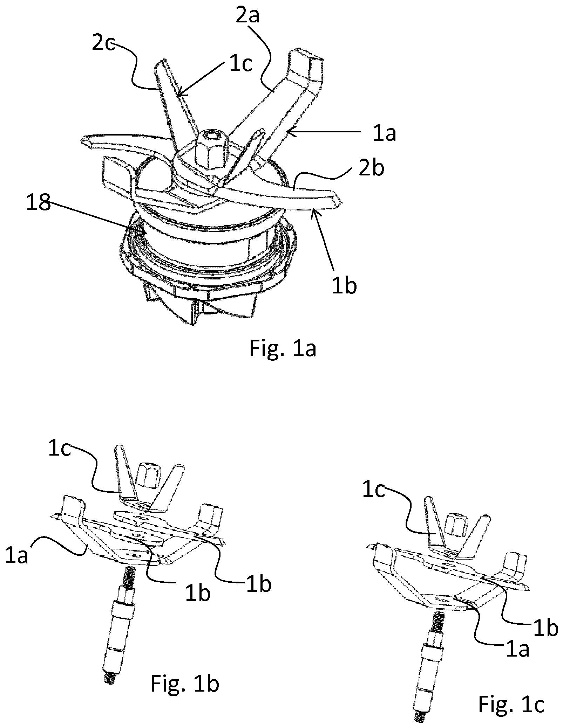

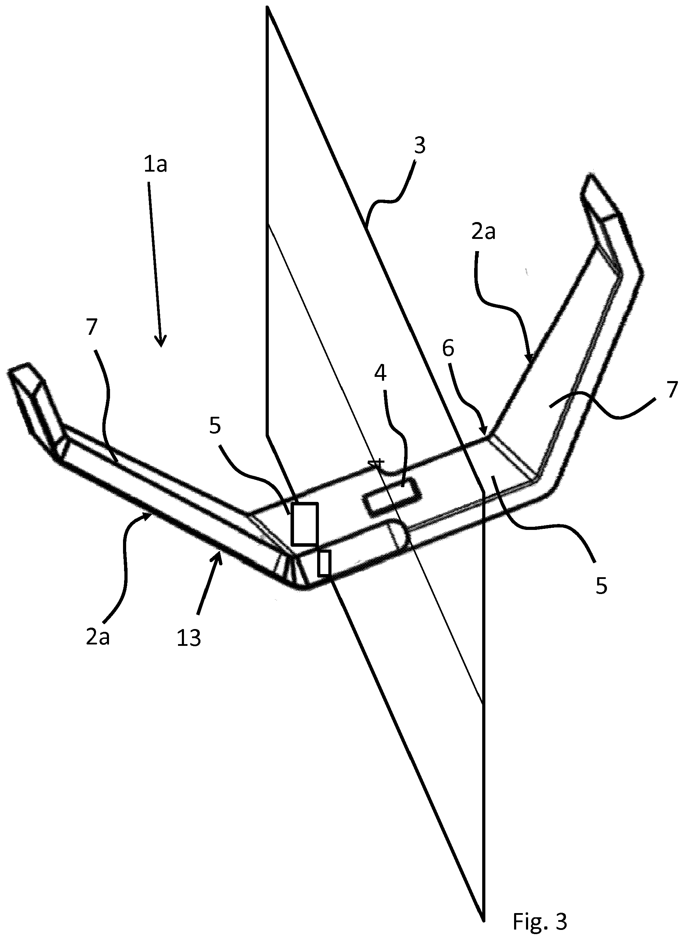

FIG. 1a shows an embodiment of a blender blade assembly. The blade assembly 18 comprises a first blade 1a, described in detail below with reference to FIG. 3-6. The first blade 1a has two symmetrical first blade arms 2a arranged for reaching outwardly and upwardly. On top of the first blade 1a the second blade 1b is arranged. The second blade is generally flat and has a curved outer shape (C-shape) on each second blade arms 2b.The C-shaped blade is sharpen on top. In the embodiment illustrated in FIG. 1b, the second blade 2a comprises two separate pieces or second blade arms 2b that are arranged on top of each other in the blades assembly, forming an S-shaped blade. In this way two levels of chopping or cutting areas are created. The second blade 1b may also be made out of a single piece of material as shown in FIG. 1c. In this embodiment the second blade arms 2b are arranged opposite each other on the same level. Generally, the C-shaped blade sweeps the bottom of a blender jar, such that possible residue stuck in the corners are reduced and integrated back to the vortex.

The blade assembly 18 may also comprise a third blade 1c arranged on top of the first and second blades. The third blade 1c comprises third blade arms 2c arranged upwardly reaching from a planar base section. The third blade is particularly added in blender jars having a wide bottom as the distance between the winglets of the first blade 1a can be far from each other, and could allow ingredients to bounce within the upper surfaces of the blade, without being processed. The third blade 1c may be added on top of the other blade, to cover the centre of the blender vortex. The third blade arms 2c may be bent in different angles depending on the particular jar geometry and relation to the other blades. In some embodiments the blender jar is provided with an vertical rib on the inside of the jar wall which may co-operate with the third blade 1c. The rib may divert the circulation and throw the ingredients to the centre of the blender jar, and the ingredients are received and sliced by the third blades 1c.

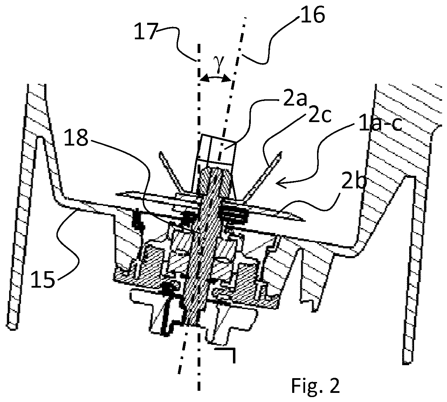

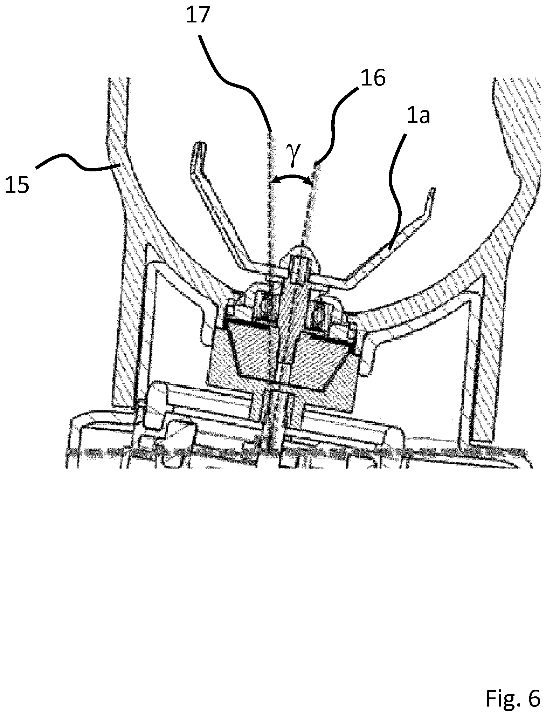

FIG. 3 shows a perspective view of an embodiment of a blender blade 1 of the present invention. The blender blade 1 has two blade arms 2. The blade arms 2 extend from a common (virtual) centre plane 3. The centre plane 3 centrically crosses a mounting hole 4 provided for mounting the blender blade 1 to a driving unit or driving shaft of a blender. The illustrated blade may be used alone as a single blade in a blades assembly as illustrated in FIG. 6, or as a first blade as one of several blades in a blades assembly similar to the one described in relation to FIG. 1a-c and 2.

Each of the blade arms 2 comprises a planar base section 5 extending perpendicularly from the centre plane 3. With the first blade 1a, the base section 5 merges at its outer end 6 into a wing section 7.

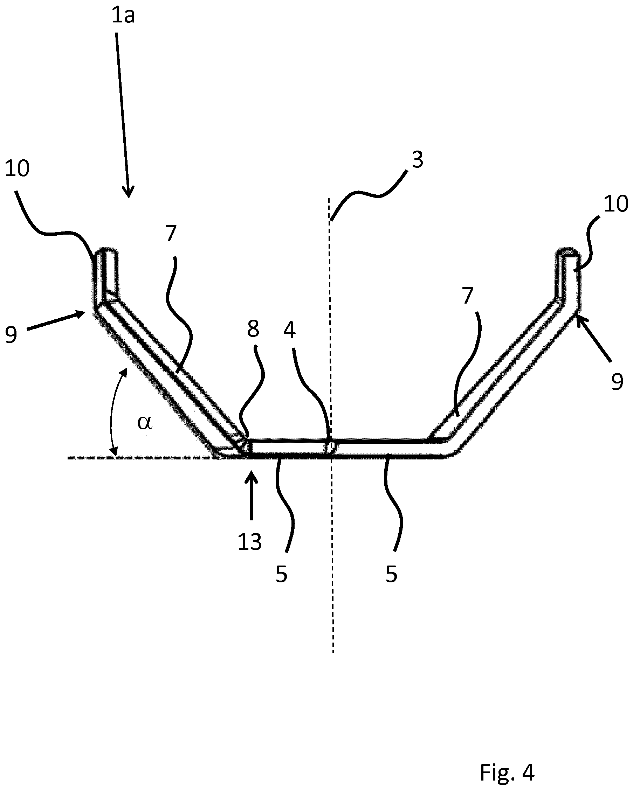

The wing section 7 is angled upwards from the base section 5 as can be seen in more detail in FIG. 4 showing a side view of the blender blade 1. In particular, the wing section 7 is angled upwards relative to a plane defined by the base sections 5. The angle α by which the wing section 7 is angled upwards lies in the range between 10 degrees and 60 degrees.

Preferably, the angle α is selected and adapted in accordance with at least one geometrical parameter of a blender jar in which the first blade 1a is intended to be operated. Such a parameter may in particular be at least one of a bottom diameter, bottom curvature and bottom cross section of a respective blender jar.

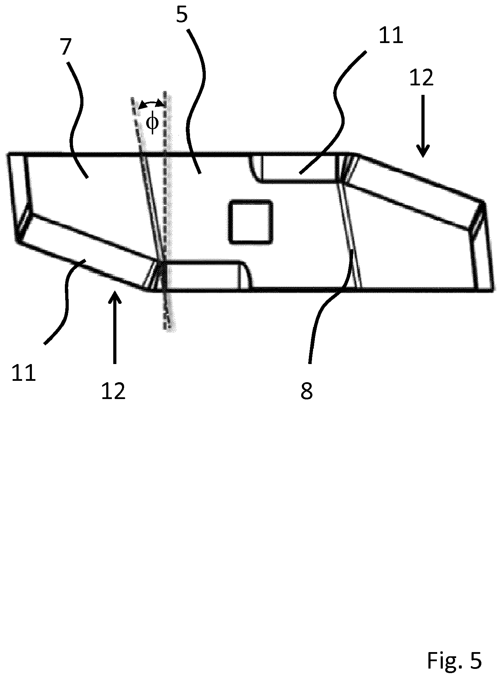

The wing sections 7 of the first blade as shown in FIG. 3 are twisted such that a buckling line 8 between the base section 5 and the wing section 7 intersects the centre plane 3 in an acute twist angle φ. This configuration can readily be seen from FIG. 5 showing a top view of the first blade 1a.

The configurations and shapes that may be implemented for the blender blade 1 as shown in the figures in particular are adequate for generating favourable drag and lift forces in a substance, in particular viscous substance, in turn leading to enhanced mixing and blending results, in particular for hard ingredients in liquids and viscous substances. Further, the blender blade configuration provides enhanced performance and allows power optimized operation of a respective blender.

As can be best seen from FIG. 3 and FIG. 4, the wing section 7 of each first blade arm 2a merges at its upper end 9 into a winglet section 10. The winglet section 10 in the present embodiment is oriented upwards and is running essentially parallel to the centre plane 3. The winglet section 10 as implemented with the first blade 1a is effective in reducing turbulences generated by vortices at the end of the first blade arms 2a during operation. This leads to improved and more efficient mixing and blending.

With the first blade 1a of the present embodiment, each first blade arm 2a comprises a cutting edge 11 respectively starting at the centre plane 3 and running along a leading edge 12 of each first blade arm 2a, which can be best seen in FIG. 2 and FIG. 4. The cutting edge 11 in the present case respectively extends at the leading edge 12 over the base section 5, the wing section 7 and the winglet section 10.

In this case, a sharpen or bevelled edge is present at the upper side of the first blade 1a. Providing the cutting edge 11 at the upper side of the blender blade has been proven to result in enhanced blending results, in particular for the proposed geometry and shape of the first blade 1a.

With regard to the twist angle φ it is of particular advantage if the twist angle is selected in dependence of at least one of a bottom cross section, a bottom diameter and a bottom curvature of a blender jar in which the first blade 1a is to be operated. Adjusting the twist angle φ to the geometric and structural configuration of the blender jar in particular leads to enhanced mixing, blending and vortex generation.

Referring now in particular to FIG. 6 showing section of a blender 14, the first blade 1a is provided at a bottom side of a blender jar 15. The blender blade 1a is attached rotatably around an axis of rotation 16 to the bottom side of the blender jar 15. The bottom of the blender jar 15 in the present case has a semi spherical shape described by the swept area below the blade, and the angle α is selected in dependence of the diameter and curvature of the bottom of the blender jar 15.

In particular with reference to FIG. 6 it can be seen that accumulation of particulate matter at the bottom of or below the blender jar 15 during mixing can be greatly avoided by adequately selecting the geometry of the blender blade 1a. Further, vortex circulation and distribution over the blender jar 15 can be optimized, in particular by matching the blender blade geometry and shape parameters to the blender jar bottom geometry.

Further reference is now made to FIG. 6, in which the ordinary operational position of the blender jar 15 and first blender blade 1a is shown in more detail. In FIG.6, the orientation of a working surface on which the blender during ordinary operation will be or is positioned is schematically indicated by a horizontal broken line.

The axis of rotation 16 of the first blade 1a within the blender jar 15 is tilted from a normal axis 17 of the working surface by a tilt angle γ. A tilt arrangement of the blender blade 1a relative to the normal axis 17 has been proven advantageous for optimizing vortex generation in blending and mixing procedures. In particular, static areas in which vortex generation within the blender jar 15 will be constrained can be greatly avoided. In addition, accumulation of particulate matter between the blender blade 1a and the bottom of the blender jar 15 can largely be prevented.

The tilt angle γ by which the axis of rotation 16 of the blender blade 1a is tilted against the normal axis 17 of the working surface preferably lies in the range between 5 degrees to 20 degrees. Such angles turned out to provide optimal and efficient mixing and blending results, in particular with spherical-shaped bottom geometries.

In all and in particular with reference to the figures, the blender blade assembly 18 and first blender blade 1a as proposed herein is suitable for obtaining enhanced mixing and blending results. Further, the performance and power consumption of a blender utilizing a respective blender assembly 18 can be optimized.

### List of reference numerals

- 1a, 1b, 1c: blender blades
- 2a, 2b, 2c: blade arms
- 3: centre plane
- 4: mounting hole
- 5: base section
- 6: outer end
- 7: wing section
- 8: buckling line
- 9: upper end
- 10: winglet section
- 11: cutting edge
- 12: leading edge
- 13: bottom side
- 14: blender
- 15: blender jar
- 16: axis of rotation
- 17: normal axis
- 18: blender blade assembly

- α: angle
- φ: twist angle
- γ: tilt angle

## Claims

1. Blender blade assembly (18) having a first blade (1a) with two first blade arms (2a) extending from a centre plane (3) in opposite directions, the blade assembly further comprises a second blade (1b) with two second blade arms (2b), wherein each second blade arm (2b) comprises a curve shaped blade wherein each blade arm (2a) of the first blade (1a)comprises a planar base section (5) extending perpendicularly from the centre plane (3), the base section (5) merges at its outer end (6) into a wing section (7) angled upwards from the base section (5), and the wing section (7) on the first blade (1a) merges at its upper end (9) into a winglet section (10), preferably running essentially parallel to the centre plane (3), **characterized in that** the wing section (7) is angled upwards by an angle (α) lying in the range between 10 degrees and 60 degrees.

2. Blender blade assembly according to claim 1, wherein the first blade (1a) is twisted such that a buckling line (8) between the base section (5) and the wing section (7) intersects the centre plane (3) in an acute angle.

3. Blender blade assembly (18) according to any of claims 1 to 2, wherein each first blade arm (2a) comprises a cutting edge (11) starting essentially at the centre plane (3) and running along a leading edge (12) of each first blade arm (2a) at least over the base section (5) and wing section (7), and preferably at least partially over a respective winglet section (10), wherein the cutting edge (11) is present at the upper side of the first blade (1a).

4. Blender blade assembly (18) according to claim 1, wherein the second blade arms (2b) comprises two curve-shaped blades (1b) arranged as separate blades, one on top of the other and oriented away from each other.

5. Blender blade assembly (18) according to claim 1, wherein the second blade arms (2b) are arranged in one piece.

6. Blender blade assembly (18) according to any of claims 1 to 5, wherein the assembly further comprises a third blade (1c) comprising an upper centered blade.

7. Blender (14), comprising a blender jar (15) and a blender blade assembly (18) according to any of claims 1 to 6, wherein the blender blade assembly (18) is rotatably attached at a bottom site of the blender jar (15), and wherein the curve shaped second blade arms (2b) have a generally flat configuration and being arranged parallel to a bottom surface of a bottom of the blender jar (15) intended for operating the blender blade assembly (18) therein.

8. Blender (14) according to claim 7, wherein the angle (α) by which the wing section (7) is angled upwards lies in the range between 10 degrees and 60 degrees, and preferably is selected in dependence of at least one of a bottom cross section, bottom diameter and bottom curvature of a blender jar (15) intended for operating the blender blade assembly (18) therein.

9. Blender (14) according to at least one of claims 7 to 8, wherein a twist angle (φ) by which the buckling line (8) intersects the centre plane (3) lies in the range between 1 degrees and 90 degrees and preferably is selected in dependence of at least one of a bottom cross section, bottom diameter and bottom curvature of a blender jar (15) intended for operating the blender blade assembly (18) therein.

10. Blender (14) according to any of claims 7 to 9, wherein in the ordinary operational position on a working surface, an axis of rotation (16) of the blender blade assembly (18) within the blender jar (15) is tilted from the perpendicular axis (17) of the working surface.

11. Blender (14) according to claim 10, wherein a tilt angle (γ) of the axis of rotation (16) lies in the range from 5 to 20 degrees.

## Patentansprüche

1. Mischerschaufelanordnung (18), die eine erste Schaufel (1a) mit zwei ersten Schaufelarmen (2a) aufweist, die sich von einer mittleren Ebene (3) in entgegengesetzte Richtungen erstrecken, wobei die Schaufelanordnung ferner eine zweite Schaufel (1b) mit zwei zweiten Schaufelarmen (2b) umfasst, wobei jeder zweite Schaufelarm (2b) eine kurvenförmige Schaufel umfasst, wobei jeder Schaufelarm (2a) der ersten Schaufel (1a) einen planaren Grundabschnitt (5) umfasst, der sich rechtwinklig von der mittleren Ebene (3) erstreckt, wobei der Grundabschnitt (5) an seinem äußeren Ende (6) in einen Flügelabschnitt (7) übergeht, der von dem Grundabschnitt (5) nach oben abgewinkelt ist, und der Flügelabschnitt (7) an der ersten Schaufel (1a) an seinem oberen Ende (9) in einen Flügelendscheibenabschnitt (10) übergeht, der sich vorzugsweise im Wesentlichen parallel zu der mittleren Ebene (3) erstreckt, **dadurch gekennzeichnet, dass** der Flügelabschnitt (7) um einen Winkel (α), der in einem Bereich zwischen 10 Grad und 60 Grad liegt, nach oben abgewinkelt ist.

2. Mischerschaufelanordnung nach Anspruch 1, wobei die erste Schaufel (1a) so gebogen ist, dass eine Knicklinie (8) zwischen dem Grundabschnitt (5) und dem Flügelabschnitt (7) die mittlere Ebene (3) in einem spitzen Winkel schneidet.

3. Mischerschaufelanordnung (18) nach einem der Ansprüche 1 bis 2, wobei jeder erste Schaufelarm (2a) eine Schaufelschneide (11) umfasst, die im Wesentlichen an der mittleren Ebene (3) beginnt und sich entlang einer Vorderkante (12) jedes ersten Schaufelarms (2a) wenigstens über den Grundabschnitt (5) und den Flügelabschnitt (7) und vorzugsweise wenigstens zum Teil über einen entsprechenden Flügelendscheibenabschnitt (10) erstreckt, wobei die Schaufelschneide (11) an der Oberseite der ersten Schaufel (1a) vorliegt.

4. Mischerschaufelanordnung (18) nach Anspruch 1, wobei die zweiten Schaufelarme (2b) zwei kurvenförmige Schaufeln (1b) umfassen, die als getrennte Schaufeln jeweils übereinander und weg voneinander ausgerichtet angeordnet sind.

5. Mischerschaufelanordnung (18) nach Anspruch 1, wobei die zweiten Schaufelarme (2b) in einem Stück angeordnet sind.

6. Mischerschaufelanordnung (18) nach einem der Ansprüche 1 bis 5, wobei die Anordnung ferner eine dritte Schaufel (1c) umfasst, die eine obere zentrierte Schaufel umfasst.

7. Mischer (14), umfassend ein Mischergefäß (15) und eine Mischerschaufelanordnung (18) nach einem der Ansprüche 1 bis 6, wobei die Mischerschaufelanordnung (18) auf drehbare Weise an einer Bodenseite des Mischergefäßes (15) angebracht ist und wobei die kurvenförmigen zweiten Schaufelarme (2b) einen im Allgemeinen flachen Aufbau aufweisen und parallel zu einer Bodenfläche eines Bodens des zum Betrieb der Mischerschaufelanordnung (18) in demselben bestimmten Mischergefäßes (15) angeordnet sind.

8. Mischer (14) nach Anspruch 7, wobei der Winkel (α), um den der Flügelabschnitt (7) nach oben abgewinkelt ist, in einem Bereich zwischen 10 Grad und 60 Grad liegt und vorzugsweise abhängig von einem Bodenquerschnitt, einem Bodendurchmesser und/oder einer Bodenkrümmung eines zum Betrieb der Mischerschaufelanordnung (18) in demselben bestimmten Mischergefäßes (15) ausgewählt ist.

9. Mischer (14) nach wenigstens einem der Ansprüche 7 bis 8, wobei ein Drehwinkel (φ), um den die Knicklinie (8) die mittlere Ebene (3) schneidet, in einem Bereich zwischen 1 Grad und 90 Grad liegt und vorzugsweise abhängig von einem Bodenquerschnitt, einem Bodendurchmesser und/oder einer Bodenkrümmung eines zum Betrieb der Mischerschaufelanordnung (18) in demselben bestimmten Mischergefäßes (15) ausgewählt ist.

10. Mischer (14) nach einem der Ansprüche 7 bis 9, wobei in der gewöhnlichen Betriebsstellung auf einer Arbeitsfläche eine Drehachse (16) der Mischerschaufelanordnung (18) innerhalb des Mischergefäßes (15) von der Senkrechtachse (17) der Arbeitsfläche weg geneigt ist.

11. Mischer (14) nach Anspruch 10, wobei ein Neigungswinkel (γ) der Drehachse (16) in einem Bereich von 5 bis 20 Grad liegt.

## Revendications

1. Ensemble de lame de mixeur (18) comprenant une première lame (1a) présentant deux premiers bras de lame (2a) qui s'étendent à partir d'un plan central (3) dans des directions opposées, l'ensemble de lame comprenant en outre une deuxième lame (1b) présentant deux seconds bras de lame (2b), dans lequel chaque second bras de lame (2b) comprend une lame de forme courbe, dans lequel chaque bras de lame (2a) de la première lame (1a) comprend une section de base plane (5) qui s'étend perpendiculairement à partir du plan central (3), la section de base (5) se transformant à son extrémité extérieure (6) en une section d'aile (7) inclinée vers le haut à partir de la section de base (5), et la section d'aile (7) sur la première lame (1a) se transforme à son extrémité supérieure (9) en une section d'ailette (10), qui s'étend de préférence essentiellement parallèlement au plan central (3), **caractérisé en ce que** la section d'aile (7) est inclinée vers le haut d'un angle (α) qui est compris dans la gamme en 10 degrés à 60 degrés.

2. Ensemble de lame de mixeur selon la revendication 1, dans lequel la première lame (1a) est torsadée de telle sorte qu'une ligne de flambage (8) entre la section de base (5) et la section d'aile (7) coupe le plan central (3) en formant un angle aigu.

3. Ensemble de lame de mixeur (18) selon l'une quelconque des revendications 1 à 2, dans lequel chaque premier bras de lame (2a) comporte un bord de coupe (11) qui commence essentiellement au plan central (3) et qui s'étend le long d'un bord avant (12) de chaque premier bras de lame (2a) au moins sur la section de base (5) et la section d'aile (7), et de préférence au moins partiellement sur une section d'ailette respective (10), dans lequel le bord de coupe (11) est présent au niveau du côté supérieur de la première lame (1a).

4. Ensemble de lame de mixeur (18) selon la revendication 1, dans lequel les seconds bras de lame (2b) comprennent deux lames de forme courbe (1b) agencées comme des lames séparées, une au-dessus de l'autre et orientées à l'écart l'une de l'autre.

5. Ensemble de lame de mixeur (18) selon la revendication 1, dans lequel les seconds bras de lame (2b) sont agencés d'une seule pièce.

6. Ensemble de lame de mixeur (18) selon l'une quelconque des revendications 1 à 5, dans lequel l'ensemble comprend en outre une troisième lame (1c) comprenant une lame centrée supérieure.

7. Mixeur (14), comprenant un récipient de mixeur (15) et un ensemble de lame de mixeur (18) selon l'une quelconque des revendications 1 à 6, dans lequel l'ensemble de lame de mixeur (18) est attaché de façon rotative en un point du fond du récipient de mixeur (15), et dans lequel les seconds bras de lame de forme courbe (2b) présentent une configuration essentiellement plate et sont agencés parallèlement à une surface de fond d'un fond du récipient de mixeur (15) destiné à actionner la lame de mixeur (18) dans celui-ci.

8. Mixeur (14) selon la revendication 7, dans lequel l'angle (α) duquel la section d'aile (7) est inclinée vers le haut est compris dans la gamme de 10 degrés à 60 degrés, et est de préférence sélectionné en fonction d'au moins un critère parmi une section transversale du fond, un diamètre du fond et une courbure du fond d'un récipient de mixeur (15) destiné à actionner l'ensemble de lame de mixeur (18) dans celui-ci.

9. Mixeur (14) selon au moins une des revendications 7 à 8, dans lequel un angle de torsion (φ) selon lequel la ligne de flambage (8) coupe le plan central (3) est compris dans la gamme de 1 degré à 90 degrés, et est de préférence sélectionné en fonction d'au moins un critère parmi une section transversale du fond, un diamètre du fond et une courbure du fond d'un récipient de mixeur (15) destiné à actionner l'ensemble de lame de mixeur (18) dans celui-ci.

10. Mixeur (14) selon l'une quelconque des revendications 7 à 9, dans lequel, dans la position de fonctionnement ordinaire sur une surface de travail, un axe de rotation (16) de l'ensemble de lame de mixeur (18) à l'intérieur du récipient de mixeur (15) est incliné par rapport à l'axe perpendiculaire (17) de la surface de travail.

11. Mixeur (14) selon la revendication 10, dans lequel un tilt angle d'inclinaison (γ) de l'axe de rotation (16) est compris dans la gamme de 5 degrés à 20 degrés.
